# EUROPÄISCHE PATENTSCHRIFT

(11) **EP 2 984 933 B1**
(45) Veröffentlichungstag und Bekanntmachung des Hinweises auf die Patenterteilung: **04.09.2019**
(21) Anmeldenummer: 15177822.2
(22) Anmeldetag: 22.07.2015
(51) Int. Cl.: A21B 3/15, H01F 7/02

(54) **BACKUNTERLAGE**
BAKING UNDERLAY
SUPPORT DE CUISSON

(30) Priorität: 08.08.2014 DE 102014111331
(43) Veröffentlichungstag der Anmeldung: 17.02.2016
(73) Patentinhaber: Cofresco Frischhalteprodukte GmbH & Co. KG, 32427 Minden (DE)
(72) Erfinder: ARNING, Hans-Jürgen, 32312 Lübbecke (DE); MÜTHER, Nina, 32457 Porta Westfalica (DE)
(74) Vertreter: Dantz, Jan Henning

(56) Entgegenhaltungen:
- EP-B1- 2 002 723
- DE-A1- 1 943 914
- DE-B3-102005 047 257
- FR-A1- 2 545 415
- US-A- 5 520 945
- US-B1- 7 005 613
- US-B1- 7 842 323

## Beschreibung

Die vorliegende Erfindung betrifft eine Backunterlage zur Zubereitung von Lebensmitteln, umfassend ein blattförmiges Material mit einer Oberseite und einer auf einer Auflage auflegbaren Unterseite.

Aus der EP 2 044 842 ist eine Backunterlage bekannt, die aus einem blattförmigen Material gebildet ist, das gewölbte Erhebungen und Vertiefungen aufweist, und damit ein Belüften des Backgutes ermöglicht. Solche Backunterlagen haben sich an sich bewährt, sind allerdings sehr leichtgewichtig und verschieben sich leicht auf einem Backblech oder einer Arbeitsplatte. Wenn die Backunterlage auf einer Rolle aufgewickelt ist, stört auch die inhärente Neigung des Wiederaufrollens. Zudem besteht die Gefahr, dass die Backunterlage bei einem Umluftbetrieb eines Backofens bewegt wird.

Die DE 10 2005 047 257 B3 offenbart ein Backblech, das eine Koch-, Brat- oder Backfläche mit nach einer oben weisenden Oberflächennormale sowie eine Aufstandsfläche mit einer nach unten weisenden Oberflächennormale aufweist. Um eine Verbesserung der Griffigkeit des Blechs zu erreichen, ist erfindungsgemäß vorgesehen, dass die Aufstandsfläche mit mindestens einem Kontaktelement mit hohem Haftreibungskoeffizienten versehen ist.

Die EP 2 002 723 B1 offenbart einen Gargutträger mit einer Einlage, die aus Papier besteht. Die Einlage kann an ihrer Unterseite in Teilbereichen mit einer rutschhemmenden Beschichtung versehen sein.

Ferner wird in der US 5,520,945 eine Unterlage für Lebensmittel bereitgestellt, die mehrlagig ausgebildet ist und eine durchlässige Oberschicht und eine darunter liegende saugfähige Schicht aufweist. Eine solche mehrlagige Unterlage ist vergleichsweise aufwändig im Aufbau und nicht speziell als blattförmige Backunterlage vorgesehen.

Die FR 2 545 415 A1 offenbart ein mit Silikon beschichtetes Glasfasergewebe, das als mehrfach verwendbare Unterlage für Backwaren eingesetzt werden kann.

Es ist daher Aufgabe der vorliegenden Erfindung, eine Backunterlage zur Zubereitung von Lebensmitteln zu schaffen, die eine verbesserte Handhabung aufweist.

Diese Aufgabe wird mit einer Backunterlage mit den Merkmalen des Anspruches 1 gelöst.

Die Backunterlage umfasst ein blattförmiges Material, insbesondere ein Blatt oder eine Bahn, bei dem an der Unterseite zumindest bereichsweise eine rutschhemmende Beschichtung vorgesehen ist. Dadurch werden die Hafteigenschaften des blattförmigen Materials verbessert, das dann besser auf einer Arbeitsplatte oder einem Backblech abgelegt werden kann, ohne dass ein Verrutschen erfolgt. Zudem verstärkt die rutschhemmende Beschichtung das blattförmige Material, so dass dieses im Bereich der Beschichtung etwas steifer wird. Durch das Gewicht der rutschhemmenden Beschichtung wird die Gefahr reduziert, dass sich die Backunterlage bei einem Umluftbetrieb eines Backofens bewegt.

Die rutschhemmende Beschichtung weist ein Elastomer auf, insbesondere ein Silikon. Die Beschichtung kann dabei vollflächig oder in einem Muster nur über einen Teilbereich an der Unterseite aufgebracht sein. Die Beschichtung kann zudem durch Symbole, Hinweise oder Firmenlogos gebildet werden, was auch optisch ansprechend ist.

Die Backunterlage weist eine Hitzebeständigkeit von mehr als 200° C, insbesondere mehr als 220° C, auf, so dass ein Einsatz im Backofen möglich ist. Ferner ist das blattförmige Material der Backunterlage wasser- und fettundurchlässig, so dass ein Einsatz zum Backen und Garen möglich ist.

In einer bevorzugten Ausgestaltung wird die rutschhemmende Beschichtung auf die Unterseite des blattförmigen Materials aufgedruckt. Dabei kann die rutschhemmende Beschichtung in einer anderen Farbe als das blattförmige Material ausgebildet sein, so dass die rutschhemmende Beschichtung auch eine Dekoroberfläche ausbildet.

Das blattförmige Material ist erfindungsgemäß ein Backpapier. Es kann beispielsweise ein Pergamentpapier eingesetzt werden, das ein Flächengewicht zwischen 30 g bis 60 g/m², insbesondere 35 bis 50 g/m², aufweist. Ferner kann das blattför-mige Material an der Oberseite mit Silikon beschichtet sein.

Gemäß einer bevorzugten Ausgestaltung umfasst die rutschhemmende Beschichtung ein magnetisches Material, insbesondere ein permanent magnetisches Material. Dadurch wird die Haftung an einem Backblech verbessert. Der Anteil des magnetischen Materials kann in einem Bereich zwischen 20 Gew.-% bis 89 Gew.-% der Beschichtung liegen.

Die Erfindung wird nachfolgend anhand mehrerer Ausführungsbeispiele mit Bezug auf die beigefügten Zeichnungen näher erläutert. Es zeigen:
- Figur 1A: eine Ansicht einer erfindungsgemäßen Backunterlage im Einsatz;
- Figur 1B: eine Ansicht der Unterseite der Backunterlage der Figur 1A;
- Figur 2: eine Ansicht einer Backunterlage mit vollflächiger Beschichtung;
- Figur 3: eine modifizierte Ausgestaltung einer Backunterlage, und
- Figur 4: eine modifizierte Ausgestaltung einer Backunterlage.

Eine Backunterlage umfasst ein blattförmiges Material 1, das entweder von einer Bahn abgewickelt und dann abgetrennt wird oder als blattförmiger Zuschnitt eingesetzt werden kann. Das blattförmige Material 1 umfasst eine Oberseite 2 und eine Unterseite 3, die auf einer Auflage, beispielsweise einer Arbeitsplatte oder einem Backofen, auflegbar ist. An der Unterseite 3 ist eine rutschhemmende Beschichtung 4 in Form von Streifen aufgebracht, die für eine bessere Anhaftung des blattförmigen Materials 1 an einer Auflage sorgt. Beispielsweise kann auf der Backunterlage ein Teig ausgerollt werden, und die Verschiebung der Backunterlage wird durch die rutschhemmende Beschichtung 4 zumindest reduziert.

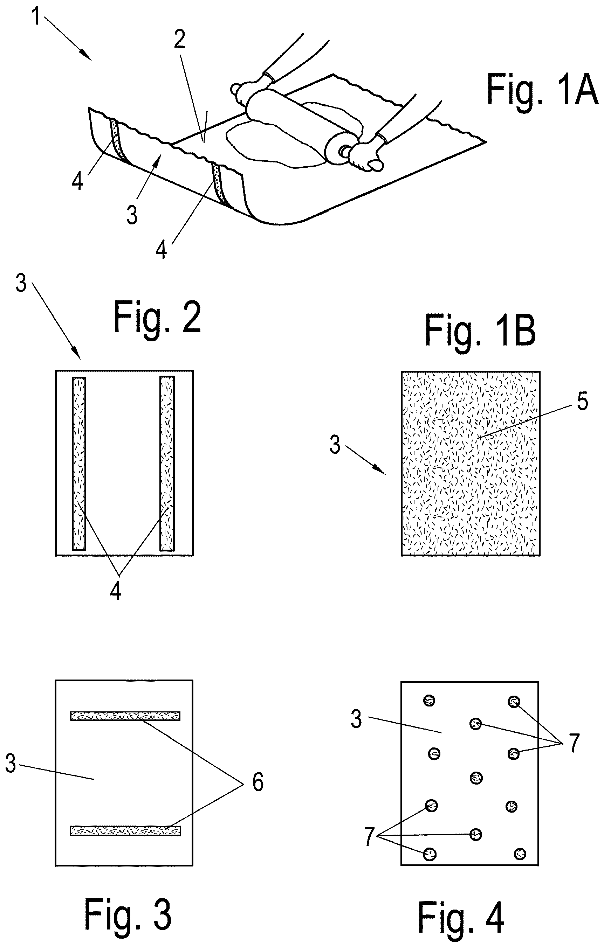

In den Figuren 1A und 1B ist an der Unterseite 3 des blattförmigen Materials 1 die rutschhemmende Beschichtung 4 in Form vom Streifen aufgebracht, die parallel zur Längsrichtung des blattförmigen Materials 1 verlaufen und benachbart zu den Längsrändern angeordnet sind. Es ist auch möglich, statt der zwei Streifen nur einen Streifen oder mehr als zwei Streifen vorzusehen.

Bei dem Ausführungsbeispiel der Figur 2 ist eine vollflächige Beschichtung 5 aus einem rutschhemmenden Material an der Unterseite 3 der Backunterlage vorgesehen.

Bei dem in Figur 3 gezeigten Ausführungsbeispiel sind zwei Querstreifen als rutschhemmende Beschichtung 6 an der Unterseite 3 der Backunterlage vorgesehen.

In Figur 4 ist eine rutschhemmende Beschichtung 7 in Form von Punkten an der Unterseite 3 der Backunterlage vorgesehen.

Die rutschhemmende Beschichtung umfasst ein Elastomer, insbesondere ein Silikon, oder ist im Wesentlichen aus dem Elastomer bzw. dem Silikon gebildet. Dabei kann die Menge an Beschichtungsmaterial beispielsweise zwischen 2 g/m² und 20 g/m², insbesondere 4 g/m² bis 10 g/m², betragen.

Als blattförmiges Material 1 wird erfindungsgemäß ein Backpapier eingesetzt, insbesondere auch ein Pergamentpapier, das an der Oberseite beschichtet sein kann, beispielsweise mit Silikon, damit ein Anhaften des Gargutes an der Oberseite 2 vermieden wird. Vorzugsweise ist das blattförmige Material 1 hitzebeständig bis zu Temperaturen von mindestens 200° C, insbesondere mindestens 220° C, so dass ein Einsatz im Backofen problemlos möglich ist.

Die rutschhemmende Beschichtung 4, 5, 6, 7 an der Unterseite 3 der Backunterlage wird vorzugsweise in einem Druckverfahren aufgebracht, beispielsweise einem Sieb-, Tief-, Flexo- oder Hochdruckverfahren. Die Beschichtung 4, 5, 6, 7 kann auch in Form von Symbolen, Texten, Logos oder Ähnlichem erfolgen, wobei dann das Beschichtungsmaterial vorzugsweise eine andere Farbe besitzt als die Unterseite 3 des blattförmigen Materials 1. Die Beschichtung kann hierfür eingefärbt sein, beispielswese mittels Pigmenten. Sowohl die rutschhemmende Beschichtung 4, 5, 6, 7 als auch die übrigen Materialien der Backunterlage sind für den Lebensmittelbereich zugelassen, so dass ein Einsatz zur Zubereitung von Lebensmitteln möglich ist.

Die Oberseite 2 des blattförmigen Materials 1 kann mit Silikon beschichtet sein, insbesondere Platin-Silikon, wobei die Auftragsmenge in einem Bereich zwischen 0,3 bis 1 g/m², insbesondere 0,4 bis 0,6 g/m², erfolgt.

In einem weiteren Ausführungsbeispiel enthält die rutschhemmende Beschichtung 4, 5, 6, 7 ein magnetisches Material, insbesondere ein permanent magnetisches Material, das beispielsweise in einem Anteil von 20 Gew.-% bis 80 Gew.-%, bezogen auf das Beschichtungsmaterial, vorhanden ist. Dadurch kann die Backunterlage besser an magnetisierbaren Materialien, wie Eisen oder Stahl, anhaften, die meist für Backbleche zum Einsatz kommen.

### Bezugszeichenliste

- 1: blattförmiges Material
- 2: Oberseite
- 3: Unterseite
- 4: Beschichtung
- 5: Beschichtung
- 6: Beschichtung
- 7: Beschichtung

## Patentansprüche

1. Backunterlage zur Zubereitung von Lebensmitteln, umfassend ein blattförmiges Material (1) aus Backpapier, das wasser- und fettundurchlässig ist, mit einer Oberseite (2) und einer auf einer Auflage auflegbaren Unterseite (3), **dadurch gekennzeichnet, dass** die Unterseite (3) zumindest bereichsweise mit einer rutschhemmenden Beschichtung (4, 5, 6, 7) versehen ist, wobei die rutschhemmende Beschichtung (4, 5, 6, 7) ein Elastomer aufweist, insbesondere ein Silikon und die Backunterlage eine Hitzebeständigkeit von mehr als 200° C, insbesondere mehr als 220° C, aufweist.

2. Backunterlage nach Anspruch 1, **dadurch gekennzeichnet, dass** die rutschhemmende Beschichtung (4, 5, 6, 7) auf die Unterseite (3) des blattförmigen Materials (1) aufgedruckt ist.

3. Backunterlage nach Anspruch 1 oder 2, **dadurch gekennzeichnet, dass** die rutschhemmende Beschichtung (5) vollflächig auf die Unterseite (3) aufgebracht ist.

4. Backunterlage nach Anspruch 1 oder 2, **dadurch gekennzeichnet, dass** die rutschhemmende Beschichtung (4, 6, 7) in einem Muster, insbesondere in Streifen, auf einen Teilbereich der Unterseite (3) aufgebracht ist.

5. Backunterlage nach einem der vorhergehenden Ansprüche, **dadurch gekennzeichnet, dass** das blattförmige Material (1) ein Pergamentpapier mit einem Flächengewicht vom 30 g/m² bis 60 g/m², insbesondere 35 bis 50 g/m², ist

6. Backunterlage nach einem der vorhergehenden Ansprüche, **dadurch gekennzeichnet, dass** das blattförmige Material (1) an der Oberseite (2) mit Silikon beschichtet ist.

7. Backunterlage nach einem der vorhergehenden Ansprüche, **dadurch gekennzeichnet, dass** die rutschhemmende Beschichtung (4, 5, 6, 7) ein magnetisches Material, insbesondere ein permanent magnetisches Material, enthält.

8. Backunterlage nach einem der vorhergehenden Ansprüche, **dadurch gekennzeichnet, dass** die rutschhemmende Beschichtung (4, 5, 6, 7) eine andere Farbe aufweist als das blattförmige Material (1).

## Claims

1. Baking underlay for preparation of foodstuffs, comprising a sheet-shaped material (1) of baking paper which is water-impermeable and grease-impermeable, with an upper side (2) and a lower side (3) which is placeable on a support, **characterised in that** the lower side (3) is provided at least regionally with a slip-resisting coating (4, 5, 6, 7), wherein the slip-resisting coating (4, 5, 6, 7) comprises an elastomer, particularly a silicon, and the baking underlay has a heat resistance of more than 200° C, particularly more than 220° C.

2. Baking underlay according to claim 1, **characterised in that** the slip-resisting coating (4, 5, 6, 7) is printed on the lower side (3) of the sheet-shaped material (1).

3. Baking underlay according to claim 1 or 2, **characterised in that** the slip-resisting coating (5) is applied to the lower side (3) over the whole area.

4. Baking underlay according to claim 1 or 2, **characterised in that** the slip-resisting coating (4, 6, 7) is applied in a pattern, particularly in strips, to a part region of the lower side (3).

5. Baking underlay according to any one of the preceding claims, **characterised in that** the sheet-shaped material (1) is a parchment paper with an area weight of 30 g/m² to 60 g/m², particularly 35 to 50 g/m².

6. Baking underlay according to any one of the preceding claims, **characterised in that** the sheet-shaped material (1) is coated with silicon at the upper side.

7. Baking underlay according to any one of the preceding claims, **characterised in that** the slip-resisting coating (4, 5, 6, 7) contains a magnetic material, particularly a permanently magnetic material.

8. Baking underlay according to any one of the preceding claims, **characterised in that** the slip-resisting coating (4, 5, ,6, 7) has a colour different from the sheet-shaped material (1).

## Revendications

1. Support de cuisson destiné à la préparation d'aliments comprenant un matériau en forme de feuille (1) constitué par du papier de cuisson qui est imperméable à l'eau et aux graisses, comprenant une face supérieure (2) et une face intérieure (3) pouvant être appliquée sur un support,
**caractérisé en ce que**
la face intérieure (3) est équipée au moins par zones d'un revêtement anti-glissement (4, 5, 6, 7), ce revêtement anti-glissement (4, 5, 6, 7) renfermant un élastomère, en particulier un silicone et le support de cuisson ayant une résistance à la chaleur supérieure à 200° C, en particulier supérieure à 220 C.

2. Support de cuisson conforme à la revendication 1,
**caractérisé en ce que**
le revêtement anti-glissement (4, 5, 6, 7) est comprimé sur la face inférieure (3) du matériau en forme de feuille (1).

3. Support de cuisson conforme à la revendication 1 ou 2,
**caractérisé en ce que**
le revêtement anti-glissement (5) est appliqué sur la totalité de la surface de la face inférieure (3).

4. Support de cuisson conforme à la revendication 1 ou 2,
**caractérisé en ce que**
le revêtement anti-glissement (4, 6, 7) est appliqué selon un modèle, en particulier selon des bandes sur une zone partielle de la face inférieure (3).

5. Support de cuisson conforme à l'une des revendications précédentes,
**caractérisé en ce que**
le matériau en forme de feuille (1) est un papier sulfurisé ayant un poids surfacique de 30 g/m² à 60 g/m², en particulier de 35 à 50 g/m².

6. Support de cuisson conforme à l'une des revendications précédentes,
**caractérisé en ce que**
le matériau en forme de feuille (1) est recouvert de silicone sur sa face supérieure (2).

7. Support de cuisson conforme à l'une des revendications précédentes,
**caractérisé en ce que**
le revêtement anti-glissement (4, 5, 6, 7) renferme un matériau magnétique, en particulier un matériau magnétique permanent.

8. Support de cuisson conforme à l'une des revendications précédentes,
**caractérisé en ce que**
le revêtement anti-glissement (4, 5, 6, 7) a une couleur différente de celle du matériau en forme de feuille (1).
